Europäisches Patentamt

European Patent Office

Office européen des brevets

(19)

(11) Veröffentlichungsnummer : **0 137 185**
**B1**

(12) # EUROPÄISCHE PATENTSCHRIFT

(45) Veröffentlichungstag der Patentschrift :
23.03.88

(51) Int. Cl.⁴ : **F 15 B 11/16**

(21) Anmeldenummer : 84109330.5

(22) Anmeldetag : 07.08.84

(54) **Hydrauliksystem mit einer Pumpe mit variabler Fördermenge und einem Vorrangventil.**

(30) Priorität : 11.08.83 US 524802

(43) Veröffentlichungstag der Anmeldung :
17.04.85 Patentblatt 85/16

(45) Bekanntmachung des Hinweises auf die Patenterteilung : 23.03.88 Patentblatt 88/12

(84) Benannte Vertragsstaaten :
AT BE CH DE FR GB IT LI NL SE

(56) Entgegenhaltungen :
EP-A- 0 061 005
US-A- 4 034 563
US-A- 4 343 151

(73) Patentinhaber : DEERE & COMPANY
1 John Deere Road
Moline Illinois 61265 (US)

(72) Erfinder : Miller, James Anton
1727 Four Winds Dr.
Cedar Falls Iowa 50643 (US)
Erfinder : Eagles, Derek Malcolm
107 Rebecca Road
Hudson Iowa 50613 (US)

(74) Vertreter : Feldmann, Bernhard et al
DEERE & COMPANY European Office, Patent Department Steubenstrasse 36-42 Postfach 503
D-6800 Mannheim 1 (DE)

EP 0 137 185 B1

## Beschreibung

Die Erfindung bezieht sich auf ein Hydrauliksystem mit einer Pumpe mit variabler Fördermenge und einem Vorrangventil zum Steuern der Druckflüssigkeit zu einem Primärkreis und einem Sekundärkreis, wobei der Primärkreis ein den Zufluß zu einem bevorrechtigten Verbraucher steuerndes Ventil aufweist, zwischen Vorrangventil und Ventil eine Signalleitung vorgesehen ist, eine Zuführleitung an die Pumpe angeschlossen ist, das Vorrangventil in Abhängigkeit von dem Druck in der Signalleitung verstellbar ist und wobei die Signalleitung bei aus seiner Neutralstellung verschobenem Ventil mit der Druckseite des bevorrechtigten Verbrauchers verbunden ist.

Bei derartigen Hydrauliksystemen dient der Primärkreis vorzugsweise zum Beaufschlagen einer hydrostatischen Lenkung, bei der sich das Ventil bei nichtbewegtem Lenkrad in seiner Neutralstellung befindet, in der der Zulauf zum bevorzugten Verbraucher unterbrochen ist. Befindet sich das Ventil aber in einer seiner Arbeitsstellungen, in der ein Beaufschlagen des Verbrauchers über die Pumpe erfolgt, so kann es vorkommen, daß im Falle der Lenkung die Räder beim Einschlagen auf ein Hindernis treffen und damit im Verbraucher eine Gegenkraft auslösen, die größer ist als der Pumpendruck. Dadurch entsteht im Hydrauliksystem ein Rückfluß, der das Lenkrad für die Bedienungsperson ganz unerwartet plötzlich zurückdreht. Wegen der damit verbundenen Gefahren ist dies natürlich unerwünscht.

Bei dem Hydrauliksystem, von dem die Erfindung ausgeht (US-A-4 343 151), ist als bevorrechtigter Verbraucher im Primärkreis ein Motor vorgesehen, wobei der Sekundärkreis zum bevorrechtigten Verbraucher parallel und in Reihe geschaltet werden kann, und zwar in Abhängigkeit von vorgegebenen Druckwerten. Bei von außen auf den bevorrechtigten Verbraucher einwirkenden Kräften können Rückdrücke entstehen, die den Pumpendruck überwinden, so daß im Hydrauliksystem unter Druck stehende Rückflüsse auftreten können.

Die mit der Erfindung zu lösende Aufgabe wird darin gesehen, bei den Pumpendruck übersteigenden Gegendrücken am Verbraucher einen Rückfluß zu vermeiden.

Diese Aufgabe ist gemäß der Erfindung dadurch gelöst worden, daß die Zuführleitung an das Ventil angeschlossen und die Signalleitung blockierbar ist, sobald der in ihr herrschende Druck größer ist als der über die Zuführleitung zum bevorrechtigten Verbraucher gelieferte Druck.

Auf diese Weise wird, wenn das Ventil des Primärkreises beispielsweise durch ein Drehen des Lenkrades in eine Stellung gebracht wurde, in der die Pumpe mit dem bevorrechtigten Verbraucher über die Zuführleitung und die Signalleitung verbunden ist, die Signalleitung sofort blockiert, sobald an dem Verbraucher eine Kraft wirkt, die größer ist als der Pumpendruck. Damit wird ein eventuell auftretender Rückdruck sofort in der Signalleitung aufgefangen und kann keine schädlichen Wirkungen entfalten.

Nach einer Weiterbildung der Erfindung ist die Pumpe als druckkompensierte Pumpe ausgebildet.

In der Signalleitung kann ein Steuerventil vorgesehen sein, das über den Druck in der Zuführleitung verstellbar ist und bei einem Druck in der Signalleitung, der größer ist als der Druck in der Zuführleitung, in eine erste Endstellung verstellbar ist, in der die Verbindung der Signalleitung zwischen Vorrangventil und dem Ventil unterbrochen ist. Somit kann der Rückdruck durch ein zwischenzuschaltendes Steuerventil aufgefangen werden, das zusätzlich noch zum Beaufschlagen des Vorrangventils mit unerschiedlichen Drücken dient.

Des weiteren verbindet nach einer Weiterbildung der Erfindung eine weitere Zuführleitung die Pumpe mit dem Sekundärkreis, und in der weiteren Zuführleitung ist das Vorrangventil vorgesehen, das zwischen einer geschlossenen und einer offenen Stellung verstellbar ist und so den Zufluß zu dem bevorrechtigten Verbraucher in einfacher Weise steuern kann.

Schließlich kann erfindungsgemäß das Ventil im Primärkreis mit einer Rücklaufleitung versehen sein, die erste Zuführleitung ein Rückschlagventil aufweisen, an das Vorrangventil an der der Signalleitung abgelegenen Seite eine Pilotleitung angeschlossen werden und die Pilotleitung mit der weiteren Zuführleitung stromaufwärts des Vorrangventils verbunden sein.

Ferner ist es vorteilhaft, daß in der Signalleitung stromabwärts des Steuerventils eine Blende und ein Überströmventil vorgesehen sind, das zu dem Vorrangventil parallel geschaltet ist, wobei das Steuerventil in seiner ersten Endstellung die Zuführleitung mit dem Abschnitt der Signalleitung zwischen Steuerventil und Vorrangventil verbindet.

In der Zeichnung sind zwei nachfolgend näher erläuterte Ausführungsbeispiele der Erfindung dargestellt. Es zeigt:

Fig. 1 ein Hydrauliksystem mit Lastfühler und einem zwischen einer offenen und einer geschlossenen Stellung verschiebbaren Vorrangventil;

Fig. 2 ein ähnliches Hydrauliksystem wie in Fig. 1, jedoch mit einem als Dreistellungsventil ausgebildeten Vorrangventil.

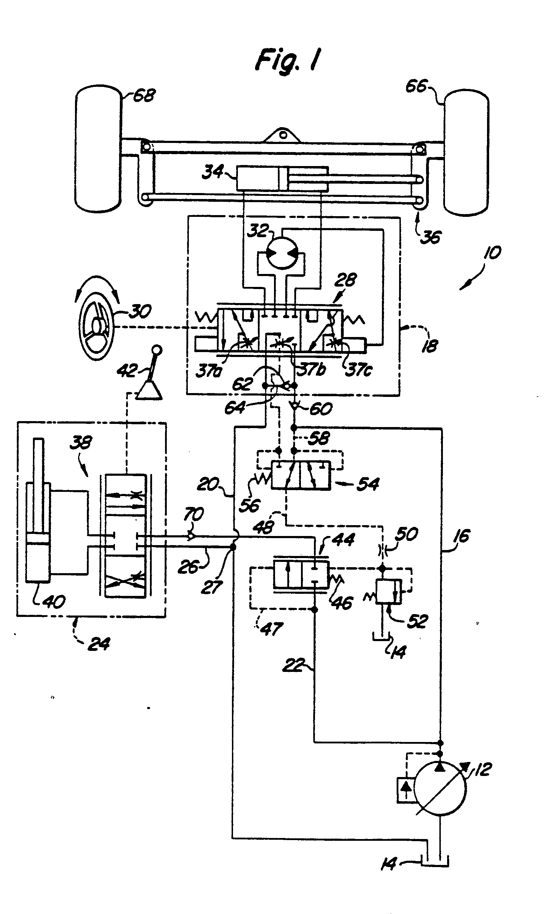

Das Hydrauliksystem nach Fig. 1 ist in seiner Gesamtheit mit 10 bezeichnet und dient primär zum Steuern der Lenkung eines Kraft- oder Arbeitsfahrzeuges, insbesondere eines Ackerschleppers oder einer Baumaschine. Natürlich ist der Einsatz nicht auf die Steuerung der Lenkung begrenzt, da auch andere Aggregate anstelle der Lenkung Verwendung finden können. Nur werden diese Aggregate immer bevorzugt mit Druckflüssigkeit versorgt. Im einzelnen weist das Hydrauliksystem eine Pumpe 12 mit veränderlicher Fördermenge auf, die Flüssigkeit aus einem Sammelbehälter 14 ansaugt und unter Druck stehende Flüssigkeit über eine erste Zuführleitung 16 an einem bevorzugten Arbeitskreis 18 abgeben kann. Drucklose oder Rücklaufflüssigkeit gelangt über eine Rücklaufleitung 20 zurück zum Sammelbehälter 14. Die Pumpe 12 kann ferner noch über eine zweite Zuführleitung 22 einen Sekundärkreis 24 versorgen, der über eine Leitung 26, die an einer Verbindungsstelle 27 in die Rücklaufleitung 20 mündet, mit dem Sammelbehälter 14 in Verbindung steht. Die Leitung 26 kann aber auch direkt zum Sammelbehälter 14 führen. Der bevorzugte Arbeitskreis 18 genießt immer Priorität, das heißt, sein Verbraucher wird bei Bedarf immer bevorzugt mit unter Druck stehender Flüssigkeit versorgt, damit seine Funktion auch bei druckbeaufschlagtem Verbraucher im Sekundärkreis stets gewährleistet ist. Im dargestellten Ausführungsbeispiel ist der Arbeitskreis 18 mit einem Steuerventil 28 versehen, das über ein von Hand betätigbares Lenkrad 30 und einen durch Flüssigkeit aktivierten Drehkörper 32 oder dergleichen verstellbar ist und das Druckflüssigkeit den beiden Enden eines Hydraulikzylinders 34 zuführen kann, der dann ein Lenkgestänge 36 entsprechend verstellt. In der Zeichnung sind die Verbindungsleitungen zwischen Steuerventil 28, Hydraulikzylinder 34 und Drehkörper 32 sowie die Verbindung zwischen Hydraulikzylinder und Lenkgestänge schematisch dargestellt. Die Funktion entspricht der üblichen. Zu erwähnen bleibt lediglich, daß das als Dreistellungsventil ausgebildete Steuerventil 28 mit drei vorzugsweise verstellbaren Blenden 37 a, b und c versehen ist, die zum Dosieren des Flüssigkeitsdurchflusses dienen.

In dem Sekundärkreis 24 ist ein Stellventil 38 vorgesehen, das über Leitungen mit den beiden Enden eines weiteren Hydraulikzylinders 40 verbunden ist. Dieser kann vielen Anwendungen dienen. Eine davon wäre das Anheben und Absenken eines an das Fahrzeug anbaubaren Gerätes. Vorzugsweise ist das Stellventil 38 über einen Hebelmechanismus 42 verstellbar. Es kann aus einer Neutralstellung in jeweils zwei Endstellungen verstellt werden, in denen dann jeweils ein Ende des weiteren Hydraulikzylinders 40 mit der Pumpe 12 über eine Drossel und das andere Ende mit dem Sammelbehälter 14 verbunden sein kann.

Ein Vorrangventil 44 ist in der zweiten Zuführleitung 22 vorgesehen und zwischen einer offenen und einer geschlossenen Stellung verschiebbar. Es dient zum Steuern des Flüssigkeitsdruckes zu dem bevorzugten Arbeitskreis 18 durch Drosseln des Flüssigkeitsflusses von der Pumpe 12 zum Sekundärkreis 24, sofern der Arbeitskreis 18 benötigt wird. Über eine Feder 46, die an seiner rechten Seite angreift, wird das Vorrangventil 44 in Richtung auf seine geschlossene Stellung gedrückt. Dabei wird der Zufluß zum Sekundärkreis 24 zunächst gedrosselt und schließlich ganz unterbrochen. An der der Feder 46 abgelegenen linken Seite des Vorrangventils 44 ist eine Pilotleitung 47 angeschlossen, die anderenends stromaufwärts des Vorrangventils an die Zuführleitung 22 vor dem Vorrangventil auf dessen linke Seite wirkt und bestrebt ist, das Vorrangventil 44 in seine offene Stellung zu verstellen, in der der Zufluß zum Sekundärkreis 24 ungedrosselt oder nur geringfügig gedrosselt erfolgt.

Das Hydrauliksystem 10 ist desweiteren mit einer Signalleitung 48 ausgerüstet, die das Steuerventil 28 mit der rechten Seite des Vorrangventils 44 verbindet. Sie überträgt Drucksignale, die von der Last, die am Hydraulikzylinder 34 angreift, ausgehen auf die rechte Seite des Vorrangventils 44, so daß der dann dort herrschende Flüssigkeitsdruck zusammen mit der Kraft der Feder 46 bestrebt ist, das Vorrangventil 44 in Richtung auf seine geschlossene Position zu verstellen. Sobald an der rechten Seite des Vorrangventils 44 ein Druck aufgebaut wird, verschiebt sich das Vorrangventil nach links in Richtung auf seine geschlossene Stellung, wobei der Zufluß zum Sekundärkreis 24 gedrosselt wird. Diese Drosselung bewirkt, daß der Druck in dem Leitungsstück der Zuführleitung 22 vor dem Vorrangventil und in der Zuführleitung 16 ansteigt. Damit wirken der Flüssigkeitsdruck in der Signalleitung 48 und die Kraft der Feder 46 mit der Pumpe 12 zusammen, um den Zufluß zu dem Sekundärkreis 24 zu drosseln, wobei der Flüssigkeitsdruck in dem bevorzugten Arbeitskreis 18 reguliert wird. Hierdurch ist gewährleistet, daß die Pumpe 12 dem Arbeitskreis 18 stets eine ausreichende Flüssigkeitsmenge sowie ausreichend hohen Druck zur Verfügung stellt.

In der Signalleitung 48 sind eine Blende 50 zum Dosieren der Flüssigkeit und ein Überströmventil 52 vorgesehen. Letzteres ist zu dem Vorrangventil 44 parallel geschaltet, wird durch eine Feder in seiner geschlossenen Stellung gehalten und kann über den Flüssigkeitsdruck stromabwärts der Blende 50 in eine Offenstellung gebracht werden, in der dann Flüssigkeit in den Sammelbehälter 14 gelangen kann. Damit öffnet das Überströmventil nur in Abhängigkeit von einem vorgegebenen Wert und die überströmende Flüssigkeit kann wieder verwendet werden.

Bei derartigen bevorzugten Arbeitskreisen für eine Lenkung kann, wenn ein Rückdruck, der größer ist als der Pumpendruck am Hydraulikzylinder 34, und ein Rückfluß durch den Drehkörper 32 in Kombination auftreten, es vorkommen, daß eine Drehkraft erzeugt wird, die das Lenkrad 30 ruckartig in einem Drehsinn dreht, der dem von der Bedienungsperson gewählten entgegengesetzt ist. Dadurch muß die Lenkstellung wieder berichtigt werden. Beides ist unerwünscht. Dies wird im vorliegenden Fall unter anderem durch ein Signalsteuerventil 54 vermieden, das in der Signalleitung 48 zwischen dem Arbeitskreis 18 und dem Vorrangventil 44 vorgesehen ist. Es ist als Dreiwege-Zweistellungsventil ausgebildet und kann durch die Kraft einer Feder 56 und dem Druck in der Signalleitung 48, deren Leitungsstück zwischen Steuerventil 28 und Signalsteuerventil 54 hierzu über einen Abzweig mit der linken Seite des Signalsteuerventils 54 verbunden ist, in einer ersten in der Zeichnung gezeigten Stellung gehalten werden, in der die Zuführleitung 16 mit dem Leitungsstück der Signalleitung 48 zwischen dem Signalsteuerventil 54 und der Blende 50 verbunden ist. Die Zuführleitung 16 ist hierzu über eine Zwischenleitung 58 an das Signalsteuerventil 54 angeschlossen. Von der Zwischenleitung 58 führt noch ein weiterer Abzweig zu der rechten Seite des Signalsteuerventils 54, so daß dieses über den in der Zuführleitung 16 herrschenden Druck in eine zweite Stellung nach links verschoben werden kann, in der das Steuerventil 28 mit der rechten Seite des Vorrangventils 44 und mit dem Überströmventil 52 verbunden ist.

Das Signalsteuerventil 54 kann auf Druckänderungen der Flüssigkeit in der Zuführleitung 16 und in der Signalleitung 48 ansprechen und kann aufgrund solcher Druckänderungen einen Flüssigkeitsrückfluß aus dem Arbeitskreis 18 verhindern, wenn der Flüssigkeitsdruck in der Zuführleitung 16 geringer ist als der Flüssigkeitsdruck in der Signalleitung 48, oder wenn eine äußere Stellkraft auf den Hydraulikzylinder 34 einwirkt, die größer ist als der dort herrschende Flüssigkeitsdruck. Dadurch, daß ein Flüssigkeitsfluß aus dem Steuerventil 28 verhindert wird, eliminiert man diesen Flüssigkeitsweg für Rückflüssigkeitsfluß durch den Drehkörper 32.

In dem Hydrauliksystem 10 ist ferner noch ein Rückschlagventil 60 vorgesehen, das in dem Leitungsstück der ersten Zuführleitung 16 angeordnet ist, das das Steuerventil 28 mit der Anschlußstelle der Zwischenleitung 58 verbindet. Dieses Rückschlagventil 60 ist so angeordnet, daß es einen Rückfluß der Flüssigkeit aus dem Steuerventil 28 bzw. dem Arbeitskreis 18 durch die Zuführleitung 16 verhindert. Damit wirken das Signalsteuerventil 54 und das Rückschlagventil 60 zusammen, um das selbsttätige Zurückdrehen des Lenkrades und die Berichtigung der Lenkstellung am Lenkrad 30 zu vermeiden.

Ein weiteres Rückschlagventil 62 ist in einer Leitung 64 vorgesehen, die die Zuführleitung 16 mit der Rücklaufleitung 20 verbindet. Das Rückschlagventil 62 ist dabei so angeordnet, daß es einen Flüssigkeitsfluß von der Rücklaufleitung 20 zu der Zuführleitung 16 erlaubt, sofern aufgrund der Drehung am Lenkrad 30 ein größerer Flüssigkeitsbedarf erforderlich wird, als er von der Pumpe 12 geliefert werden kann. Sollte dies auftreten, beispielsweise, wenn der Motor bei abgeschlepptem Fahrzeug stillsteht, so wird Flüssigkeit, die normalerweise in den Sammelbehälter zurückströmt, dazu verwendet, die Zuführleitung 16 aufzufüllen, so daß in der Zuführleitung keine Kavitation auftritt.

Rechte und linke Räder sind mit 66 und 68 bezeichnet und mit dem Lenkgestänge 36 verbunden. Schließlich ist dem Sekundärkreis 24 noch ein Rückschlagventil 70 zugeordnet, das in der zweiten Zuführleitung 20 vorgesehen ist und verhindert, daß in dieser Flüssigkeit zurückströmt.

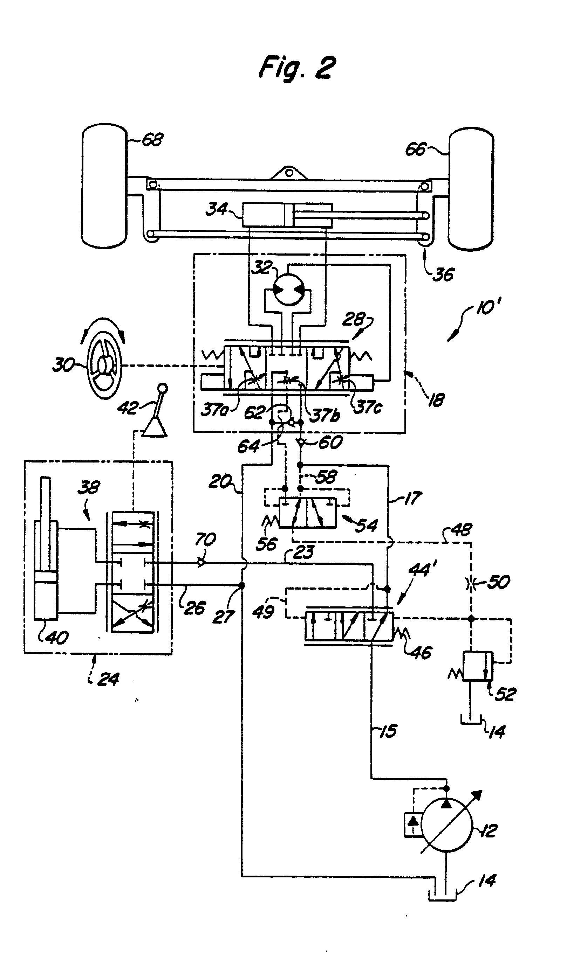

Die in Fig. 2 wiedergegebene Ausführung entspricht im wesentlichen der Ausführung nach Fig. 1, so daß bei der Beschreibung des schematischen Aufbaues nur auf die Abweichungen im einzelnen eingegangen werden muß. Das in Fig. 2 dargestellte Hydrauliksystem 10' benutzt mit Fig. 1 übereinstimmende Bezugszahlen, sofern sie identisch sind. Im Gegensatz zu Fig. 1 ist bei der Ausführung nach Fig. 2 das Vorrangventil 44' als Dreiwege-Dreistellungsschieber ausgebildet und über eine Druckleitung 15 mit der Pumpe 12 verbunden. Von dem Vorrangventil 44' führt eine Zuführleitung 17 zu dem bevorrechtigten Arbeitskreis 18 und eine zweite Zuführleitung 23, die auch das Rückschlagventil 70 aufweist, zu dem Sekundärkreis.

Über die Feder 46 wird das Vorrangventil 44' normalerweise in seiner ersten in der Zeichnung dargestellten Stellung gehalten. In dieser Stellung wird alle von der Pumpe 12 gelieferte Flüssigkeit durch die Zuführleitung 17 zu dem Arbeitskreis 18 gerichtet. Die Zuführleitung 23 wird dann durch das Vorrangventil 44' blockiert. In einer zweiten oder Mittenstellung, in die das Vorrangventil 44' über einen Flüssigkeitsdruck verstellbar ist, können die erste Zuführleitung 17 und die zweite Zuführleitung 23 mit Druckflüssigkeit gespeist werden, so daß diese dem Arbeitskreis 18 und dem Sekundärkreis 24 zugeführt wird. In seiner dritten Stellung besteht nur noch eine Verbindung von der Pumpe 12 zu der zweiten Zuführleitung 23, so daß alle Flüssigkeit von der Pumpe 12 zu dem Sekundärkreis 24 geleitet wird. Die Verstellung des Vorrangventils 44 erfolgt teilweise durch Druckimpulse oder -signale, die von der Last an dem Hydraulikzylinder 34 ausgehen oder abgegeben und durch die Signalleitung 48 geleitet werden, so daß der in ihr herrschende Druck zusammen mit der Kraft der Feder 46 bestrebt ist, das Vorrangventil 44 in seine erste Stellung zu schieben oder es in dieser zu halten. Hierdurch ist gewährleistet, daß für den bevorzugten Arbeitskreis 18 immer ein ausreichender Druck und Flüssigkeitsstrom, wie nachfolgend noch erläutert wird, vorhanden ist.

Gleichfalls ist in den Hydrauliksystem 10' noch eine Pilotleitung 49 vorgesehen, die die Zuführleitung 16 stromabwärts des Vorrangventils 44' mit dem linken Ende des Vorrangventils 44' verbindet. Damit wird bei in der Zuführleitung 16 ansteigendem Druck ein Druckimpuls oder -signal auf das linke Ende des Vorrangventils 44' übertragen, der oder das der Kraft der Feder 46 und dem Druck in der Signalleitung 48 entgegenwirkt. Sobald dieser Druckimpuls größer ist als die Kraft der Feder 46 und der Druck in der Signalleitung 48, wird sich das Vorrangventil 44 aus seiner ersten in der Zeichnung wiedergegebenen Stellung nach rechts in seine zweite und gegebenenfalls in seine dritte Stellung verschieben.

Arbeitsweise des Hydrauliksystems nach Fig. 1.

In der nachfolgenden Erläuterung des Hydrauliksystems 10 werden Drücke angegeben, bei denen die verschiedenen Ventile ansprechen. Diese Werte sind rein hypothetisch, und die Erfindung soll durch diese Werte nicht eingeengt werden.

Bei nichtlaufendem Motor des Kraftfahrzeuges wird die Pumpe 12 nicht angetrieben. Das Steuerventil 28 befindet sich dabei in seiner in der Zeichnung wiedergegebenen Neutralstellung, der Hydraulikzylinder 34 ist nicht druckbeaufschlagt, das Vorrangventil 44 befindet sich in seiner geschlossenen und dargestellten Stellung, und das Signalventil befindet sich in seiner ersten Stellung, die in der Zeichnung dargestellt ist. Sobald nun der Motor angelassen wird, wird die Pumpe 12 angetrieben und über die Zuführleitung 16 unter Druck stehende Flüssigkeit zu dem Steuerventil 28 und über die Zuführleitung 22 zu dem Vorrangventil 44 fördern. Befindet sich das Steuerventil 28 dann aber noch in seiner Neutralstellung, so wird der Flüssigkeitsfluß hier blockiert, und der Flüssigkeitsdruck in der Leitung 16 steigt an. Gleichzeitig werden die rechte und linke Seite des Vorrangventils 44 und die rechte Seite des Signalsteuerventils 54 mit Druck beaufschlagt, der aber noch nicht groß genug ist, um das Vorrangventil 44 und das Signalsteuerventil 54 aus ihren in der Zeichnung wiedergegebenen ersten Stellungen zu verschieben. Unterstellt man, daß zum Zusammenschieben der Feder 56 am Signalsteuerventil 54 ein Druck von 50 psi (3,4 bar) erforderlich ist, so wird sich das Signalsteuerventil 54 in seine zweite Stellung verschieben, wenn der Druck in der Zuführleitung auf über 50 psi (3,4 bar) ansteigt. Dieser Druck reicht aber noch nicht aus, um die Kraft der Feder 46 am Vorrangventil 44 zu überwinden, so daß dieses dann noch in seiner ersten Stellung verbleibt. Erreicht nun der Druck im Hydrauliksystem 10 einen Wert, der etwas über 50 psi (3,4 bar) liegt, so verschiebt sich das Signalsteuerventil 54 in seine zweite Stellung und unterbricht dabei die Verbindung zwischen der Zwischenleitung 58 und dem Leitungsstück der Signalleitung 48 zwischen dem Signalsteuerventil 54 und der Blende 50 und verbindet stattdessen dieses Leitungsstück mit dem Leitungsstück der Signalleitung 48 zwischen dem Signalventil 54 und dem Steuerventil 28, so daß der Druck in der Signalleitung 48 sich abbaut, da nunmehr über die Blende 37 b eine Verbindung mit der Rücklaufleitung 20 geschaffen ist, die zum Sammelbehälter 14 führt. Bei diesen Bedingungen befindet sich das Vorrangventil 44 immer noch in seiner ersten Stellung, da zum überwinden der Kraft der Feder 46 ein Druck von etwa 150 psi (10,3 bar) erforderlich ist. Steigt nun der Druck auf einen Wert von etwas über 150 psi (10,3 bar) an, so wird der am linken Ende des Vorrangventils 44 über die Pilotleitung 47 sich aufbauende Druck die Kraft der Feder 46 überwinden und das Vorrangventil 44 nach rechts in Richtung auf seine Offenstellung gegen die Kraft der Feder 46 verschieben. In der Offenstellung ist dann die Pumpe 12 sowohl mit der Leitung 16 als auch mit dem Sekundärkreis 24 verbunden. Befindet sich aber jetzt das Stellventil 38 noch in seiner gezeigten Neutralstellung, so kann kein Druck zu dem Hydraulikzylinder 40 von der Pumpe 12 gelangen, da die Zuführleitung durch das Stellventil 38 blockiert ist. Der Druck in dem Hydrauliksystem wird weiter ansteigen, bis der an der Pumpe 12 angeschlossene Kompensator anspricht, was bei einem Druck von etwa 2 300 psi (158,6 bar) erfolgt. Das geschlossene Hydrauliksystem 10 befindet sich dann in Bereitschaftsstellung.

Lenkbetätigung bei dem Hydrauliksystem nach Fig. 1 bei normalen Bedingungen.

Unterstellt man ferner, daß sich das Stellventil 38 noch in seiner Neutralstellung befindet, am bevorzugten Arbeitskreis 18 infolge Betätigung des Lenkrads 30 aber ein Flüssigkeitsbedarf entsteht, wobei in der Bereitschaftsstellung Druck sowohl am Steuerventil 28 als auch wegen des sich in seiner Offenstellung befindlichen Vorrangventils 44 am Stellventil 38 ansteht, das Signalsteuerventil 54 sich aber noch in seiner zweiten Stellung befindet, so wird sich das Steuerventil 28 aus seiner Neutralstellung in eine seiner Endstellungen verschieben, je nachdem ob eine Rechtsoder eine Linkskurve zu durchfahren ist. Für eine Rechtskurve — also einen Radeinschlag nach rechts — wird das Lenkrad 30 im Uhrzeigerdrehsinn gedreht, und das Steuerventil 28 wird sich nach rechts in seine linke Endstellung verschieben. Dadurch wird die Zuführleitung 16 über die Blende 37 a im Steuerventil 28 mit der linken Seite des Drehkörpers 32 und mit der Signalleitung 48 verbunden, die dann nicht mehr mit der Rücklaufleitung 20 in Verbindung steht. Wird die linke Seite des Drehkörpers mit der Leitung 16 verbunden, so wird seine rechte Seite über das Steuerventil 28 mit dem kolbenseitigen Ende des Hydraulikzylinders 34 verbunden und diese Seite druckbeaufschlagen. Das zylinderseitige Ende des Hydraulikzylinders ist dann mit der Rücklaufleitung 20 und somit mit dem Sammelbehälter 14 verbunden. Die Blenden 37 a und 37 c sind in den Zuflußkanälen zu dem Drehkörper 32 vorgesehen, wobei hinter den Blenden oder stromabwärts zu diesen Verbindungskanäle in die Zuflußkanäle münden, die anderenends zur Pumpenseite offen sind. Geht man davon aus, daß zum Verstellen des Hydraulikzylinders 34 und damit der Räder 66 und 68 ein Druck von 900 psi (62 bar) erforderlich ist, so ist dieser Druck niedriger als der Bereitschaftsdruck von 2 300 psi (158,6 bar). Beim Verstellen des Steuerventils 28 in eine seiner Endstellungen z. B. nach rechts in die linke Endstellung wird die Flüssigkeit aus der Zuführleitung 16 durch die Blende 37 zu dem kolbenseitigen Ende des Hydraulikzylinders 34 und in die Signalleitung 48 gelangen. In der Signalleitung 48 wird dann ein Druck von 900 psi (62 bar) herrschen, der zusammen mit der Kraft der Feder 56 auf die linke Seite des Signalsteuerventils 54 einwirkt und bestrebt ist, das Signalsteuerventil 54 in seine erste Stellung zurückzustellen. Dieser Druck reicht aber nicht aus, den Druck in der ersten Zuführleitung 16 zu überwinden, der aufgrund der Pumpe 12 bei etwa 2 300 psi (158,6 bar) liegt aber durch die Blende 37 a auf Arbeitsdruck

5

reduziert wird und auf die rechte Seite des Signalsteuerventils 54 wirkt, um es in seiner zweiten Stellung zu halten. Der Druck von 900 psi (62 bar) wird dadurch auch an der rechten Seite des Vorrangventils 44 anstehen und zusammen mit der Kraft der Feder 46 bestrebt sein, das Vorrangventil 44 in seine geschlossene Stellung zu verstellen. Da aber der Druck in der Pilotleitung 47, der auf die linke Seite des Vorrangventils 44 wirkt, größer ist, wird das Vorrangventil 44 in seiner Stellung verbleiben.

Sobald mit der Drehung am Lenkrad 30 aufgehört wird, stellt sich das Steuerventil 28 in seine Neutralstellung zurück und die Flüssigkeit in der Signalleitung 48 kann über die Blende 37 b und die Rücklaufleitung 20 zum Sammelbehälter 14 zurückgelangen. Dabei wird der Druck in der Signalleitung auf etwa Null abfallen und das System wird in seine Bereitschaftsstellung zurückkehren.

Lenkung nach Inbetriebnahme des Sekundärkreises, wobei das maximale Flüssigkeitsvolumen der Pumpe bei relativ niedrigem Druck benötigt wird.

Bei mit Druckflüssigkeit versorgtem Sekundärkreis 24 befindet sich das Stellventil 38 in einer seiner Endstellungen und das Vorrangventil 44 in seiner Offenstellung. Für die nachfolgende Funktionsbeschreibung wird unterstellt, daß der Sekundärkreis die maximale Fördermenge der Pumpe benötigt, aber einen Druck von nur 500 psi (34,5 bar). Die Pumpe 12 arbeitet dabei mit maximalen Förderhub und konstanter Flüssigkeitsmenge. Soll bei diesen Bedingungen eine Rechtskurve durchfahren werden, so wird das Lenkrad 30 nach rechts im Uhrzeigerdrehsinn eingeschlagen und das Steuerventil 28 nach rechts in seine linke Endstellung verstellt, in der die Zuführleitung 16 über die Blende 37 a mit der Signalleitung 48 und mit dem kolbenseitigen Ende des Hydraulikzylinders 34 über den Drehkörper 32 verbunden ist. Der am Hydraulikzylinder 40 anstehende Druck von 500 psi (34,5 bar) herrscht dann auch in der Zuführleitung 16 und damit auch am kolbenseitigen Ende des Hydraulikzylinders 34 und in der Signalleitung 48, allerdings vermindert durch die Verluste an der Blende 37 b. Dadurch ist der Druck am Hydraulikzylinder 34 noch nicht groß genug, um einen Einschlag der Räder 66, 68 zu bewirken, aber ausreichend, um das Signalsteuerventil 54 zusammen mit der Kraft der Feder 56 entgegen dem an der rechten Seite des Signalsteuerventils 54 herrschenden Druck in seine erste dargestellte Stellung zu verstellen, in der die Zwischenleitung 58 über das Signalsteuerventil 54 mit dem Leitungsstück der Signalleitung 48 zwischen dem Signalsteuerventil 54 und dem Vorrangventil 44 verbunden ist. Damit kann sich an der rechten Seite des Vorrangventils 44 ein dem Druck in der Zuführleitung 16 entsprechender Druck aufbauen, allerdings vermindert um die Verluste an der Blende 50, der zusammen mit der Kraft der Feder 46 das Vorrangventil 44 entgegen dem Druck an seiner linken Seite in Richtung auf seine geschlossene Stellung verschiebt, wobei der Zufluß zu dem Sekundärkreis 24 in dem Vorrangventil 44 gedrosselt wird. Bei dieser Verschiebung nach links wird der Druck in der Zuführleitung 16 und in dem Leitungsstück der Zuführleitung 22 vor dem Vorrangventil 44 ansteigen. Sobald dieser Druck einen Wert von über 900 psi (62 bar) erreicht, wird die Flüssigkeit auch zu dem Hydraulikzylinder 34 strömen und eine Verstellung seines Kolbens bewirken, wobei die verdrängte Flüssigkeit über das Steuerventil 28 und die Rücklaufleitung 20 in den Sammelbehälter 14 zurückgelangen kann. Ist der Druck in der Zuführleitung 16 auf etwa 950 psi (65,5 bar) angestiegen, so wird der an der rechten Seite des Signalsteuerventils 54 anstehende Druck in der Lage sein, das Signalsteuerventil 54 in seine zweite Stellung zurückzustellen, da er dann, wenn man unterstellt, daß an der Blende 37 a ein Druckverlust von etwa 50 psi (3,4 bar) stattfindet, den Druck in der Signalleitung 48 am linken Ende des Signalsteuerventils und auch die Kraft der Feder 56 überwindet. Dadurch liegt an der rechten Seite des Vorrangventils 44 wieder der Arbeitsdruck von etwa 900 psi (62 bar) vermindert durch die Drosselverluste an. Dabei wird das Vorrangventil 44 noch weiter in Richtung auf seine geschlossene Stellung verstellt, wobei eine weitere Drosselung des Zulaufs zum Sekundärkreis 34 und ein weiterer Druckanstieg in der Zuführleitung 16 stattfindet. Der Druck steigt damit weiter an und bei einem Druck von 1 050 psi (72,4 bar) entsteht an der Blende 37 a, deren Querschnitt gegebenenfalls in Abhängigkeit vom Lenkwiderstand verändert wird, ein Druckabfall von 150 psi, (10,3 bar) so daß der 900 psi (62 bar) Signalarbeitsdruck auch unter Mitwirkung der Feder 46 nicht mehr in der Lage ist, das Vorrangventil 44 weiter nach links entgegen dem an seiner linken Seite herrschenden Druck von 1 050 psi (72,4 bar) zu verstellen. Damit bleibt das Vorrangventil 44 stehen und die Drosselung im Vorrangventil 44 wird konstant, so daß auch der Druck in den Zuführleitungen 16 und 22 konstant bleibt. Dabei wird der Hydraulikzylinder 40 nach wie vor mit 500 psi (34,5 bar) beaufschlagt, wobei sich jedoch je nach Drosselung seine Hubgeschwindigkeit veränderte, obwohl am Hydraulikzylinder 34 der erforderliche Druck und die erforderliche Flüssigkeitsmenge zum Lenken zur Verfügung steht.

Sobald die Drehbewegung am Lenkrad 30 beendet ist, wird das Steuerventil 28 in seine Neutralstellung zurückgeführt, in der die Zuführleitung 16 durch das Steuerventil 28 blockiert und die Signalleitung 48 über das Steuerventil 28 und seine Blende 37 b mit der Rücklaufleitung 20 und dem Sammelbehälter 14 verbunden ist. Damit wird die rechte Seite des Vorrangventils 44 entlastet, da der Druck in der Signalleitung 48 bis auf Null abfällt, und der Druck in der Pilotleitung 47 kann das Vorrangventil 44 wieder nach rechts in Richtung auf seine offene Stellung verschieben.

Beim Fahren in einer Rinne oder dergleichen kann es vorkommen, daß beim Lenkeinschlag auf mindestens eines der Räder eine äußere Kraft dadurch einwirkt, daß das Rad gegen die Rinnenwand schlägt. Diese Kraft kann dann der Lenkbewegung entgegengesetzt sein und den Hydraulikzylinder 34 bzw. seinen Kolben gegen den Pumpendruck verstellen. Wären nach der Erfindung keine besonderen Vorkehrungen hiergegen getroffen, so würde sich der Kolben dann in eine dem Pumpendruck entgegengesetzte Richtung bewegen, d. h. die unter Druck stehende Flüssigkeit würde entgegengesetzt bewegt und dadurch den Drehkörper 32 in entgegengesetzter Richtung und damit auch das an diesem angreifende Lenkrad 30 bewegen. Dadurch entsteht die bereits vorerwähnte Lenkradrückdrehung, die plötzlich und in der Regel unerwartet auftritt und damit die Bedienungsperson überrascht. Je nach den auftretenden Kräften, kann die Bedienungsperson diese Lenkradrückdrehung nicht verhindern, auch wenn sie das Lenkrad 30 mit aller Kraft festhält. Die dadurch entstehenden Gefahren sind offensichtlich.

Sollte eine derartige Kraft auf eines der Räder einwirken, wenn der Sekundärkreis einen Druck von 500 psi (34,5 bar) benötigt, so passiert folgendes. Bei einer Drehung des Lenkrades 30 im Uhrzeigerdrehsinn für eine Fahrtrichtungsänderung nach rechts ist die Leitung 16, wie es vorstehend bereits mehrfach ausgeführt wurde, über die Blende 37 a im Steuerventil 28 mit dem Drehkörper 32 und dem Hydraulikzylinder 34 verbunden, so daß dessen kolbenseitiges Ende mit unter Druck stehender Flüssigkeit beaufschlagt wird, während sein zylinderseitiges Ende über das Steuerventil 28 mit der Leitung 20 und damit mit dem Sammelbehälter verbunden ist. Trifft nun eines der Räder 66 oder 68 auf ein Hindernis auf, das eine Gegenkraft erzeugt und das einschlagende Rad und damit den Kolben im Hydraulikzylinder 34 zurückstellen will, so entsteht im Drehkörper und in der Leitung 16 sowie in der Signalleitung 48 ein Rückdruck. In der Leitung 16 wird dieser Rückdruck durch das Rückschlagventil 60 aufgefangen. In der Signalleitung 48 bewirkt der Rückdruck ein sofortiges Verschieben des Signalsteuerventils 54 in seine erste und gezeigte Position, so daß die Verbindung mit der rechten Seite des Vorrangventils 44 hier unterbrochen wird. Die rechte Seite ist dann wieder an die Zwischenleitung 58 angeschlossen. Das sofortige Verstellen des Signalsteuerventils 54 wird dadurch bewirkt, daß der Rückdruck infolge der besonderen Anordnung der Blende 37 a in die Signalleitung ungedrosselt eintritt. Da das Rückschlagventil 60 stromabwärts der Zwischenleitung 58 vorgesehen ist, kann sich der Rückdruck nicht bis zum rechten Ende des Signalsteuerventils 54 fortpflanzen, so daß an der linken Seite des Signalsteuerventils eine Druckerhöhung auftritt, die zusammen mit der Kraft der Feder 56 das Signalsteuerventil 54 in seine erste Stellung verstellt und damit die Signalleitung 48 unterbricht. Damit ist ein Flüssigkeitsrückfluß unterbunden, der unter Umständen den Drehkörper 32 hätte zurückdrehen können. Somit verbleibt der Drehkörper trotz einer auf eines der Räder einwirkenden Kraft in seiner jeweiligen Stellung und eine Lenkradrückdrehung ist ausgschlossen.

Auch wenn das Rückschlagventil 60 nicht oder an anderer Stelle vorgesehen wäre, würden bei einem Rückdruck in der Leitung 16 und in der Signalleitung unterschiedliche Drücke herrschen, da der Rückdruck in der Leitung 16 noch durch die Blende 37 a gedrosselt wird, in der Signalleitung 48 jedoch nicht.

Arbeitsweise des Hydrauliksystems nach Fig. 2

In der nachfolgenden Erläuterung des Hydrauliksystems 10 werden Drücke angegeben, bei denen die verschiedenen Ventile ansprechen. Diese Werte sind rein hypothetisch, und die Erfindung soll durch diese Werte nicht eingeengt werden.

Bei nichtlaufendem Motor des Kraftfahrzeuges wird die Pumpe 12 nicht angetrieben. Das Steuerventil 28 befindet sich dabei in seiner in der Zeichnung wiedergegebenen Neutralstellung, der Hydraulikzylinder 34 ist nicht druckbeaufschlagt, und das Vorrangventil 44' und das Signalventil 54 befinden sich in ihren ersten Stellungen, die in der Zeichnung dargestellt sind. Sobald nun der Motor angelassen wird, wird die Pumpe 12 angetrieben und über die Zuführleitung unter Druck stehende Flüssigkeit zu dem Steuerventil 28 fördern. Befindet sich dieses dann aber noch in seiner Neutralstellung, so wird der Flüssigkeitsfluß hier blockiert. Gleichzeitig werden die rechte und linke Seite des Vorrangventils 44 und die rechte Seite des Signalsteuerventils 54 mit diesem Druck beaufschlagt, der aber noch nicht groß genug ist, um das Vorrangventil 44' und das Signalsteuerventil 54 aus ihren in der Zeichnung wiedergegebenen ersten Stellungen zu verschieben. Unterstellt man, daß zum Zusammenschieben der Feder 56 am Signalsteuerventil ein Druck von 50 psi (3,4 bar) erforderlich ist, so wird sich das Signalsteuerventil 54 in seine zweite Stellung verschieben, wenn der Druck in der Leitung 17 über 50 psi (3,4 bar) ansteigt. Dieser Druck reicht aber noch nicht aus, um die Kraft der Feder 46 am Vorrangventil 44' zu überwinden, so daß dieses dann noch in seiner ersten Stellung verbleibt. Da die Pumpe 12 fördert und das Steuerventil 28 den Flüssigkeitsfluß blockiert, steigt der Druck im Hydrauliksystem weiter an. Erreicht nun der Druck im Hydrauliksystem 10 einen Wert, der etwas über 50 psi (3,4 bar) liegt, so verschiebt sich das Signalsteuerventil 54 in seine zweite Stellung und unterbricht dabei die Verbindung zwischen der Zwischenleitung 58 und dem Leitungsstück der Signalleitung 48 zwischen dem Signalsteuerventil 54 und der Blende 50 und verbindet stattdessen dieses Leitungsstück mit dem Leitungsstück zwischen dem Signalventil 54 und dem Steuerventil 28, so daß der Druck in der Signalleitung 48, sich abbaut, da nunmehr über die Blende 37 b eine Verbindung mit der Rücklaufleitung 20 geschaffen ist, die zum Sammelbehälter 14 führt. Bei diesen Bedingungen befindet sich das Vorrangventil 44' immer noch in seiner ersten Stellung, da zum überwinden der Kraft der Feder 46 ein Druck von etwa 150 psi (10,3 bar) erforderlich ist. Steigt nun der Druck auf einen Wert von etwas über 150 psi (10,3 bar) an, so wird der am linken Ende des Vorrangventils 44' über die Pilotleitung 49 sich aufbauende Druck die Kraft der Feder 46 überwinden und das Vorrangventil 44' in seine zweite oder Mittenstellung verschieben, in der dann die Pumpe 12 sowohl mit der Zuführleitung 17 als auch mit der Zuführleitung 23 verbunden ist.

Bei weiterem Druckanstieg in der Pilotleitung 49 wird das Vorrangventil 44' in seine dritte Endstellung verstellt, in der dann die Druckleitung 15 nur noch mit der Zuführleitung 23 verbunden und die Zuführleitung 17 durch das Vorrangventil 44' blockiert ist. Diese Bewegungsabläufe erfolgen kurzfristig nacheinander, da die Pumpe 12 im Hydrauliksystem 10' solange fördert, bis der Bereitschaftsdruck von 2 300 psi (158,6 bar) erreicht ist.

Lenkbetätigung im Hydrauliksystem nach Fig. 2 bei normalen Bedingungen.

Unterstellt man ferner, daß sich das Stellventil 38 noch in seiner Neutralstellung befindet, am bevorzugten Arbeitskreis 18 infolge Betätigung des Lenkrades 30 aber ein Flüssigkeitsbedarf entsteht, wobei in der Bereitschaftsstellung Flüssigkeit nur zum Stellventil 38 geleitet wird, das Signalsteuerventil 54 sich aber noch in seiner zweiten Stellung befindet, so wird sich das Steuerventil 28 aus seiner Neutralstellung in eine seiner Endstellungen verschieben, je nachdem, ob eine Rechts- oder eine Linkskurve zu durchfahren ist. Für eine Rechtskurve — also einem Radeinschlag nach rechts — wird das Lenkrad 30 im Uhrzeigerdrehsinn gedreht, und das Steuerventil 28 wird sich nach rechts in seine linke Endstellung verschieben. Dadurch wird die Zuführleitung 17 über die Blende 37 a im Steuerventil 28 mit der linken Seite des Drehkörpers 32 und mit der Signalleitung 48 verbunden, die dann nicht mehr mit der Rücklaufleitung 20 in Verbindung steht. Wird die linke Seite des Drehkörpers mit der Zuführleitung 17 verbunden, so wird seine rechte Seite über das Steuerventil 28 mit dem kolbenseitigen Ende des Hydraulikzylinders 34 verbunden. Das zylinderseitige Ende des Hydraulikzylinders ist dann mit der Rücklaufleitung 20 und somit mit dem Sammelbehälter 14 verbunden. Die Blenden 37 a und 37 c sind in den Zuflußkanälen zu dem Drehkörper 32 vorgesehen, wobei hinter den Blenden oder stromabwärts zu diesen Verbindungskanälen in die Zuflußkanäle münden, die anderenends zur Pumpenseite offen sind.

Durch die Verstellung des Steuerventils 28 wird die rechte Seite des Signalsteuerventils 54 entlastet und das Signalsteuerventil 54 kann sich in seine erste gezeigte Stellung verstellen. Gleichzeitig wird die linke Seite des Vorrangventils 44' entlastet und seine rechte Seite beaufschlagt, so daß die Feder 46 das Vorrangventil 44' in Richtung seiner Mittenstellung verstellen kann, so daß der Zulauf zur Zuführleitung 17 dosiert geöffnet wird. Damit steigt der Druck in der Zulaufleitung 17 an. Bei etwa 900 psi (62 bar) wird ein Flüssigkeitsfluß durch die Drossel 37 a zum Hydraulikzylinder 34 zum Einschlagen der Räder 66 und 68 erfolgen. Bei etwa 950 psi (65,5 bar) in der Zuführleitung 17 wird sich das Signalsteuerventil 54 wieder nach rechts in seine zweite Endstellung verstellen, so daß der 900 psi (62 bar) Signalarbeitsdruck wieder auf die rechte Seite des Vorrangventils 44' wirkt. Das Vorrangventil 44' ist bei 1 050 psi (72,4 bar) in der Zuführleitung 17, die dem Arbeitsdruck von 900 psi (62 bar) in der Signalleitung 48 zuzüglich 150 psi (10,3 bar) (Kraft der Feder 46) entsprechen, ausgesteuert. Hierdurch ist gewährleistet, daß dem Arbeitskreis 18 eine ausreichende Flüssigkeitsmenge zur Verfügung steht.

Sobald mit dem Drehen des Lenkrades 30 aufgehört wird kehrt das Steuerventil 28 in seine Neutralstellung und das übrige Hydrauliksystem einschließlich Pumpe 12 in die Bereitschaftsstellung zurück.

Lenkung beim Hydrauliksystem nach Fig. 2 nach Inbetriebnahme des Sekundärkreises, wobei das maximale Flüssigkeitsvolumen der Pumpe bei relativ. niedrigem Druck benötigt wird.

Bei mit Druckflüssigkeit versorgtem Sekundärkreis 24 befindet sich das Stellventil 38 in einer seiner Endstellungen und das Vorrangventil 44' in seiner offenen dritten Stellung. Für die nachfolgende Funktionsbeschreibung wird unterstellt, daß der Sekundärkreis die maximale Fördermenge der Pumpe benötigt, aber nur einen Druck von 500 psi (34,5 bar). Soll bei diesen Bedingungen eine Rechtskurve durchfahren werden, so wird das Lenkrad 30 nach rechts im Uhrzeigerdrehsinn eingeschlagen und das Steuerventil 28 nach rechts in seine linke Endstellung verstellt, in der die Zuführleitung 17 über die Blende 37 a mit der Signalleitung 48 und mit dem kolbenseitigen Ende des Hydraulikzylinders 34 über den Drehkörper 32 verbunden ist. Durch die Verstellung des Steuerventils 28 wird die rechte Seite des Signalsteuerventils 54 entlastet und das Signalsteuerventil 54 kann sich in seine erste gezeigte Stellung verstellen. Gleichzeitig wird die linke Seite des Vorrangventils 44' entlastet und seine rechte Seite beaufschlagt, so daß die Feder 46 das Vorrangventil 44' in Richtung seiner ersten Stellung verstellen kann, wobei der Zulauf zur Zuführleitung 23 gedrosselt wird. Damit steigt der Druck in der Druckleitung 15 an und der Zulauf zur Zuführleitung 17 wird dosiert geöffnet, so daß auch hier der Druck ansteigt. Bei etwa 900 psi (62 bar) wird ein Flüssigkeitsfluß durch die Drossel 37 a zum Hydraulikzylinder 34 zum Einschlagen der Räder 66 und 68 erfolgen. Bei etwa 950 psi (65,5 bar) in der Zuführleitung 17 wird sich das Signalsteuerventil 54 wieder nach rechts in seine zweite Endstellung verstellen, so daß der 900 psi (62 bar) Signalarbeitsdruck wieder auf die rechte Seite des Vorrangventils 44' wirkt. Das Vorrangventil 44' ist bei 1 050 psi (72,4 bar) in der Zufuhrleitung 17, die dem Arbeitsdruck von 900 psi (62 bar) in der Signalleitung 48 zuzüglich 150 psi (10,3 bar) (Kraft der Feder 46) entsprechen, ausgesteuert. Hierdurch ist gewährleistet, daß dem Arbeitskreis 18 eine ausreichende Flüssigkeitsmenge zur Verfügung steht.

Sobald mit dem Drehen des Lenkrades 30 aufgehört wird, kehrt das Steuerventil 28 in seine Neutralstellung und das übrige Hydrauliksystem einschließlich Pumpe 12 in die Bereitschaftsstellung zurück.

Sollte bei Inbetriebnahme des Sekundärkreises 24 in dem Hydraulikzylinder 34 beim Lenkvorgang ein über dem Arbeitsdruck liegender Gegendruck auftreten, so blockiert das Signalsteuerventil 54 die Signalleitung 48 in der gleichen Weise, wie es für die Ausführung nach Fig. 1 beschrieben wurde.

Es wird noch darauf hingewiesen, daß das Vorrangventil 44' als Dreiwege-Dreistellungsventil ausgebildet ist und als Dosierventil arbeitet, bei dem in der zweiten Stellung die größere Flüssigkeitsmenge zu dem bevorzugten Arbeitskreis 18 gelangt und nur ein geringer Teil in die Zuführleitung 23.

## Patentansprüche

1. Hydrauliksystem (10) mit einer Pumpe (12) mit variabler Fördermenge und einem Vorrangventil (44) zum Steuern der Druckflüssigkeit zu einem Primärkreis (18) und einem Sekundärkreis (24), wobei der Primärkreis (18) ein den Zufluß zu einem bevorrechtigten Verbraucher (34) steuerndes Ventil (28) aufweist, zwischen Vorrangventil (44) und Ventil (28) eine Signalleitung (48) vorgesehen ist, eine Zuführleitung (16) an die Pumpe (12) angeschlossen ist, das Vorrangventil (44) in Abhängigkeit von dem Druck in der Signalleitung (48) verstellbar ist und wobei die Signalleitung (48) bei aus seiner Neutralstellung verschobenem Ventil (28) mit der Druckseite des bevorrechtigten Verbrauchers (34) verbunden ist, dadurch gekennzeichnet, daß die Zuführleitung (16) an das Ventil (28) angeschlossen und die Signalleitung (48) blockierbar ist, sobald der in ihr herrschende Druck größer ist als der über die Zuführleitung (16) zum bevorrechtigten Verbraucher (34) gelieferte Druck.

2. Hydrauliksystem nach Anspruch 1, dadurch gekennzeichnet, daß die Pumpe (12) als druckkompensierte Pumpe ausgebildet ist.

3. Hydrauliksystem nach Anspruch 1 oder 2, dadurch gekennzeichnet, daß in der Signalleitung (48) ein Steuerventil (54) vorgesehen ist, das über den Druck in der Zuführleitung (16) verstellbar ist und bei einem Druck in der Signalleitung (48), der größer ist als der Druck in der Zuführleitung, in eine erste Endstellung verstellbar ist, in der die Verbindung der Signalleitung (48) zwischen Vorrangventil (44) und dem Ventil (28) unterbrochen ist.

4. Hydrauliksystem nach einem oder mehreren der vorherigen Ansprüche, dadurch gekennzeichnet, daß eine weitere Zuführleitung (22) die Pumpe (12) mit dem Sekundärkreis (24) verbindet und in der weiteren Zuführleitung (22) das Vorrangventil (44) vorgesehen ist, das zwischen einer geschlossenen und einer offenen Stellung verstellbar ist.

5. Hydrauliksystem nach Anspruch 4, dadurch gekennzeichnet, daß das Ventil (28) im Primärkreis (18) mit einer Rücklaufleitung (20) versehen ist, die erste Zuführleitung (16) ein Rückschlagventil (60) aufweist, an das Vorrangventil (44) an der der Signalleitung (48) abgelegenen Seite eine Pilotleitung (47) angeschlossen ist und die Pilotleitung (47) mit der weiteren Zuführleitung (22) stromaufwärts des Vorrangventils (44) verbunden ist.

6. Hydrauliksystem nach Anspruch 3, dadurch gekennzeichnet, daß in der Signalleitung (48) stromabwärts des Steuerventils (54) eine Blende (50) und ein Überströmventil (52) vorgesehen sind, das zu dem Vorrangventil (44) parallel geschaltet ist, wobei das Steuerventil (54) in seiner ersten Endstellung die Zuführleitung (16) mit dem Abschnitt der Signalleitung (48) zwischen Steuerventil (54) und Vorrangventil (44) verbindet.

## Claims

1. A hydraulic system (10) comprising a variable-delivery pump (12) and a priority valve (44) for controlling the pressure fluid to a primary circuit (18) and a secondary circuit (24), wherein the primary circuit (18) has a valve (28) for controlling the feed flow to a privileged load (34), a signal conduit (48) is provided between the priority valve (44) and the valve (28), a feed conduit (16) is connected to the pump (12), the priority valve (44) is displaceable in dependence on the pressure in the signal conduit (48), and wherein the signal conduit (48), when the valve (28) is displaced out of its neutral position, is communicated with the pressure side of the privileged load (34), characterised in that the feed conduit (16) is connected to the valve (28) and the signal conduit (48) is blockable as soon as the pressure obtaining therein is greater than the pressure delivered by way of the feed conduit (16) to the privileged load (34).

2. A hydraulic system according to claim 1 characterised in that the pump (12) is in the form of a pressure-compensated pump.

3. A hydraulic system according to claim 1 or claim 2 characterised in that provided in the signal conduit (48) is a control valve (54) which is displaceable by way of the pressure in the feed conduit (16) and, at a pressure in the signal conduit (48) which is greater than the pressure in the feed conduit, is displaceable into a first limit position in which the communication of the signal conduit (48) between the priority valve (44) and the valve (28) is interrupted.

4. A hydraulic system according to one or more of the preceding claims characterised in that a further feed conduit (22) communicates the pump (12) with the secondary circuit (24) and provided in the further feed conduit (22) is the priority valve (44) which is displaceable between a closed and an open position.

5. A hydraulic system according to claim 4 characterised in that the valve (28) in the primary circuit (18) is provided with a return conduit (20), the first feed conduit (16) has a check valve (60), a pilot conduit (47) is connected to the priority valve (44) at the side remote from the signal conduit (48), and the pilot conduit (47) is communicated with the further feed conduit (22) upstream of the priority valve (44).

6. A hydraulic system according to claim 3 characterised in that provided in the signal conduit (48) downstream of the control valve (54) are a restrictor (50) and a relief valve (52) which is connected in parallel with the priority valve (44), wherein in its first limit position the control valve (54) communicates the feed conduit (16) with the portion of the signal conduit (48) between the control valve (54) and the priority valve (44).

**Revendications**

1. Système hydraulique (10) comportant une pompe (12) à débit variable et une valve prioritaire (44) pour la commande de l'écoulement du liquide sous pression vers un circuit primaire (18) et un circuit secondaire (24), le circuit primaire (18) comportant une valve (28) commandant l'écoulement vers un appareil utilisateur (34) de rang prioritaire, un conduit de signaux (48) étant prévu entre la valve prioritaire (44) et la valve (28), un conduit d'alimentation (16) étant raccordé à la pompe (12), la valve prioritaire (44) étant déplaçable en fonction de la pression régnant dans le conduit de signaux (48) et le conduit de signaux (48) étant relié au côté haute pression de l'appareil utilisateur de rang prioritaire (34) lorsque la valve (28) est écartée de sa position neutre, caractérisé en ce que le conduit d'alimentation (16) est raccordé à la valve (28) et le conduit de signaux (48) peut être bloqué dès que la pression qui y règne est supérieure à la pression fournie à l'appareil utilisateur de rang prioritaire (34) par l'intermédiaire du conduit d'alimentation (16).

2. Système hydraulique suivant la revendication 1, caractérisé en ce que la pompe (12) se présente sous la forme d'une pompe à compensation de pression.

3. Système hydraulique suivant la revendication 1 ou 2, caractérisé en ce qu'il est prévu dans le conduit de signaux (48) une valve de commande (54) qui est déplaçable par l'intermédiaire de la pression régnant dans le conduit d'alimentation (16) et peut être déplacée, pour une pression dans le conduit de signaux (48) supérieure à la pression dans le conduit d'alimentation, jusque dans une première position-limite dans laquelle la communication du conduit de signaux (48) entre la valve prioritaire (44) et la valve (28) est interrompue.

4. Système hydraulique suivant une ou plusieurs des revendications précédentes, caractérisé en ce qu'un autre conduit d'alimentation (22) relie la pompe (12) au circuit secondaire (24), et en ce que la valve prioritaire (44), qui est déplaçable entre une position fermée et une position ouverte, est prévue dans l'autre conduit d'alimentation (22).

5. Système hydraulique suivant la revendication 4, caractérisé en ce que la valve (28) montée dans le circuit primaire (18) est munie d'un conduit de retour (20), en ce que le premier conduit d'alimentation (16) comporte un clapet de retenue (60), en ce qu'un conduit-pilote (47) est raccordé à la valve prioritaire (44) sur le côté opposé au conduit de signaux (48) et en ce que le conduit-pilote (47) est relié à l'autre conduit d'alimentation (22) en amont de la valve prioritaire (44).

6. Système hydraulique suivant la revendication 3, caractérisé en ce qu'il est prévu dans le conduit de signaux (48), en aval de la valve de commande (54), un orifice calibré (50) et une soupape de trop-plein (52) qui est montée en parallèle avec la valve prioritaire (44), la valve de commande (54) reliant, dans sa première position-limite, le conduit d'alimentation (16) avec le tronçon du conduit de signaux (48) compris entre la valve de commande (54) et la valve prioritaire (44).

# Fig. I

# Fig. 2